# EUROPEAN PATENT SPECIFICATION

(11) **EP 1 338 670 B1**
(45) Date of publication and mention of the grant of the patent: **16.05.2007**
(21) Application number: 03002171.1
(22) Date of filing: 03.02.2003
(51) Int. Cl.: C23C 4/04

(54) **Abradable coating and method for forming same**
Abreibbare Beschichtung und Verfahren zur Herstellung
Revêtement abradable et procédé de préparation

(30) Priority: 14.02.2002 JP 2002036108
(43) Date of publication of application: 27.08.2003
(60) Divisional application: 04016801.5
(73) Proprietor: MITSUBISHI HEAVY INDUSTRIES, LTD., Tokyo (JP)
(72) Inventor: Hasezaki, Kazuhiro, Nagoya Guidance Prop. Sys. W., Higashi Tanaka, Komaki, Aichi 485-8561 (JP); Shimizu, Kunihiro, Nagoya Guidance Prop. Sys. W., Higashi Tanaka, Komaki, Aichi 485-8561 (JP); Senda, Makoto, Nagoya Aerospace Systems Works, Minato-ku, Nagoya, Aichi-ken 455-8515 (JP)
(74) Representative: Henkel, Feiler & Hänzel

(56) References cited:
- EP-A- 1 013 795
- YASUDA K ET AL: "INFLUENCE OF Y2O3 DISTRIBUTION ON THE RATE OF TETRAGONAL TO MONOCLINIC PHASE TRANSFORMATION OF YTTRIA-STABILIZED ZIRCONIA DURING HYDROTHERMAL AGING" JOURNAL OF MATERIALS SCIENCE, CHAPMAN AND HALL LTD. LONDON, GB, vol. 34, no. 15, 1 August 1999 (1999-08-01), pages 3597-3604, XP000851663 ISSN: 0022-2461
- COSTA H L ET AL: "On the abrasive wear of zirconias" 11TH INTERNATIONAL CONFERENCE ON WEAR OF MATERIALS, SAN DIEGO, CA, USA, 20-23 APRIL 1997, vol. 203-204, pages 626-636, XP002256211 Wear, March 1997, Elsevier, Switzerland ISSN: 0043-1648
- DATABASE INSPEC [Online] INSTITUTE OF ELECTRICAL ENGINEERS, STEVENAGE, GB; BRANDON D G ET AL: "Stress-induced phase transformations in Y/sub 2/O/sub 3/-stabilized ZrO/sub 2/" Database accession no. 2525518 XP002256450 & PROCEEDINGS OF THE INTERNATIONAL SYMPOSIUM ON ENGINEERING CERAMICS, JERUSALEM, ISRAEL, 16-20 DEC. 1984, vol. 71, page 165 Material Science and Engineering, May 1985, Switzerland ISSN: 0025-5416

## Description

### FIELD OF THE INVENTION AND RELATED ART STATEMENT

This invention relates to a method for forming an abradable coating applied to the surfaces of stationary parts in rotary machinery such as gas turbines. More particularly, it relates to a method for forming an abradable coating having excellent cutability which is applied, for example, to the shrouds of gas turbines.

As illustrated in FIG. 3, a gas turbine 101 usually includes a stationary shroud 103 attached to a casing (not shown) and blades 105 disposed within shroud 103 and capable of rotating around an axis of rotation (C) in the direction of rotation (r) shown by an arrow. Moreover, a very small clearance D is provided between the outer peripheral edge 105a of each blade 105 and the inner circumferential surface 103a of shroud 103. In order to suppress the leakage of hot gas, such as hot gas at about 1,500°C, through this clearance D and thereby improve the performance of gas turbine 101, it is desirable to minimize the aforesaid clearance D. However, if the clearance D is unduly small, there is a possibility that, during the rotation of blades 105, the tips of blades 105 may come into contact with the inner circumferential surface 103a of shroud 103 and thereby cause damage or other trouble to blades 105.

For this reason, it has been conventional practice to apply an abradable coating 111 having cuttability to the inner circumferential surface 103a of the aforesaid shroud 103. Consequently, even if the tips of blades 105 come into contact with the inner circumferential surface 103a of shroud 103, the aforesaid abradable coating 111 is cut away without causing damage or other trouble to rotating blades 105, and thereby provides protection for blades 105.

The aforesaid abradable coating 111, which has conventionally been used for this purpose, primarily comprises a coating formed of a partially stabilized zirconia ceramic material such as ZrO₂+8wt% Y₂O₃. Since this ceramic material is hard as evidenced by a Vickers hardness (Hv) of about 1,000 at room temperature, abradable coating 111 may actually damage the tips of rotating blade 105 on the contrary. Accordingly, an abrasive coating 113 harder than the abradable coating 111 of shroud 103 is applied to the surface of the outer peripheral edge 105a of each blade 105.

On the other hand, when the aforesaid abradable coating 111 is applied to gas turbine engines for use in helicopters, aircraft and the like, there is a possibility that sand, dust and the like may be drawn into the engine during flight and cause the blades and the shrouds to be worn away.

Thus, when conventional abradable coating 111 is applied to gas turbines, the possibility of damaging the tips of blades 105 cannot be completely eliminated. Moreover, when it is applied to the gas turbine engines of helicopters, aircraft and the like, there is a possibility that the blades and the shrouds may be worn away.
K. Yasuda et al. describe in Journal of Materials Science, Vol. 34, No. 15, August 1, 1999, pages 3597-3604 that tetragonal to monoclinic phase transformation of yttria-stabilized zirconia, namely plasma-sprayed coatings and sintered bodies containing 4-8 mass% Y₂O₃ during hydrothermal aging was investigated with respect to Y₂O₃ distribution using 1 µmφ area from electron probe microanalysis (EPMA) and 20 nmφ area from transmission electron microscopy (TEM) analysis. Phase transformation at 473 K was prevented only in plasma-sprayed coatings having more than 6.7 mass% Y₂O₃ in 20 nmφ microscopic area. Furthermore, it was confirmed influence of Y₂O₃ distribution on the rate constants of this phase transformation was observed at 368 K.

An object of the present invention is to provide an abradable coating which is applied to the surfaces of stationary parts in rotary machinery such as gas turbines, does not cause damage or other trouble to the blades during a test run, and exhibits excellent abrasion resistance during normal operations, as well as a method for forming the same.

### OBJECT AND SUMMARY OF THE INVENTION

The present invention provides a method for forming an abradable coating which comprises the steps of coating a shroud material with a partially stabilized zirconia ceramic material to form a zirconia ceramic layer having a cubic or tetragonal crystal structure on the surface of the shroud material; and subjecting the zirconia ceramic layer to shot peening and thereby transforming the crystal structure of the zirconia ceramic layer into a monoclinic crystal structure.

Usually, a zirconia ceramic material has a cubic or tetragonal crystal structure and is a hard material as evidenced by a Vickers hardness (Hv) of about 1,000. When this zirconia ceramic material is heat-treated in high-temperature water, stress-induced martensitic transformation occurs in the zirconia ceramic material owing to a high temperature applied thereto by water vapor, so that its crystal structure changes into a monoclinic crystal structure. This monoclinic zirconia ceramic material is soft as evidenced by a Vickers hardness (Hv) of about 800 or less, and has good cuttability. Accordingly, when this monoclinic zirconia ceramic material is applied to the shrouds of a gas turbine used in a high-temperature environment, it is soft and exhibits excellent cuttability at the time of a first operation (i.e., a test run) carried out to adjust the tip clearance between the blades and the shrouds. Moreover, when the zirconia ceramic material undergoes a thermal history by exposure to high temperatures (e.g., 1,000°C or above) resulting from gas turbine operation during the first operation, its crystal structure is transformed into a cubic or tetragonal crystal structure. Consequently, it increases in hardness and can maintain abrasion resistance during second and further operations.

Furthermore, when the abradable coating of the present invention is applied to a gas turbine engine for use in helicopters, aircraft and the like, the crystal structure of the abradable coating is transformed into a cubic or tetragonal crystal structure owing to the thermal environment resulting from a test run of the gas turbine, and hence shows an increase in hardness. Consequently, even if sand, dust and the like are drawn into the aforesaid gas turbine engine during second and further normal operations, the abradable coating can maintain abrasion resistance and hence prevent the blades and the shroud from being worn away.

Another embodiment of the present invention comprises a method for forming an abradable coating in which the aforesaid partially stabilized zirconia ceramic material contains at least one stabilizer selected from the group consisting of Y₂O₃, CaO, MgO and CeO₂.

This zirconia ceramic material needs to be a partially stabilized zirconia ceramic material such as ZrO₂+0.3-20wt% Y₂O₃.

Still another embodiment of the present invention comprises a method for forming an abradable coating in which the aforesaid stabilizer is Y₂O₃ and the aforesaid partially stabilized zirconia ceramic material comprises 100 parts by weight of ZrO₂ and 0.3 to 20 parts by weight of Y₂O₃.

If less than 0.3 part by weight of Y₂O₃ is added to 100 parts by weight of ZrO₂, it will be difficult to form a partially stabilized zirconia ceramic material. In this case, when the zirconia ceramic layer undergoes a thermal history due to gas turbine operation or the like, its crystal structure is transformed from a monoclinic crystal structure into a cubic or tetragonal crystal structure. However, when it is cooled afterwards, it is returned to the original soft monoclinic crystal structure and hence has poor abrasion resistance.

On the other hand, if greater than 20 parts by weight of Y₂O₃ is added to ZrO₂, the zirconia ceramic material will be completely stabilized and fail to undergo stress-induced martensitic transformation. Consequently, the crystal structure of the zirconia ceramic layer is not sufficiently transformed from a monoclinic crystal structure into a cubic or tetragonal crystal structure.

A further embodiment of the present invention comprises a method for forming an abradable coating in which the aforesaid shot peening is carried out by using a shot material having a higher hardness than zirconia.

Still a further embodiment of the present invention comprises a method for forming an abradable coating in which the aforesaid shot material comprises silicon carbide or tungsten carbide.

When the abradable coating of the present invention is applied to the shrouds of a gas turbine used in a high-temperature environment, it is soft and exhibits excellent cuttability at the time of the first operation of the gas turbine which is carried out to adjust the tip clearance. Consequently, even if the tips of blades come into contact with the shrouds, the abradable coating is cut away without causing damage or other trouble to the rotating blades. Thus, an improvement in the performance of the gas turbine can be achieved by reducing the tip clearance. Moreover, once the shrouds undergo a thermal history by exposure to high temperatures, the abradable coating is transformed into its original cubic or tetragonal crystal structure. Consequently, it shows an improvement in abrasion resistance and can hence enhance the durability of the gas turbine.

Furthermore, when the abradable coating of the present invention is applied to a gas turbine engine for use in helicopters, aircraft and the like, it increases in hardness after having undergone a thermal history by exposure to high temperatures, and can maintain abrasion resistance. Consequently, even if sand, dust and the like are drawn into the gas turbine engine, the blades and the shrouds will not be worn away.

### BRIEF DESCRIPTION OF THE DRAWINGS

FIG. 1 is a flow chart illustrating a method for forming an abradable coating in accordance with a first embodiment; and

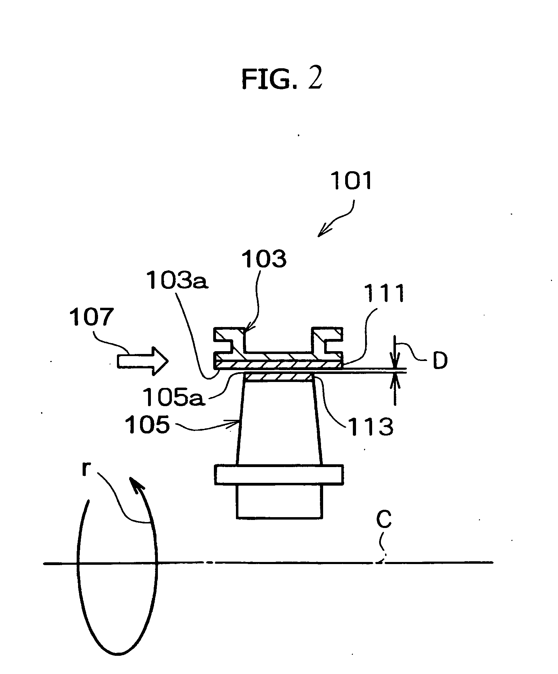

FIG. 2 is a schematic view showing the construction of a gas turbine.

### DETAILED DESCRIPTION OF PREFERRED EMBODIMENTS

The methods for forming an abradable coating in accordance with two embodiments of the present invention will be more specifically described hereinbelow with reference to the accompanying drawings.

### [First embodiment]

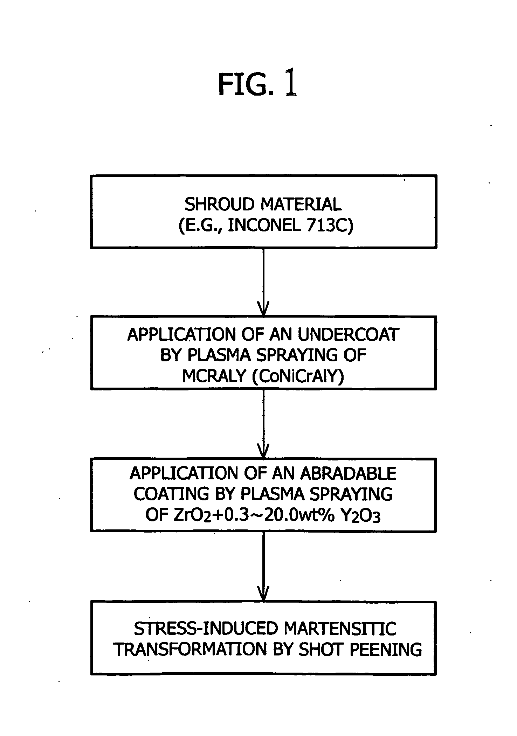

FIG. 1 is a flow chart illustrating a method for forming an abradable coating in accordance with a second embodiment. This method includes the step of subjecting the zirconia ceramic layer to shot peening and thereby causing it to undergo stress-induced martensitic transformation and produce an abradable coating having excellent cuttability.

First of all, an undercoat is applied to a shroud material comprising, for example, Inconel 713C. This undercoat is provided to relax the differential thermal expansion between the shroud material and a zirconia ceramic layer that will be described later, and is formed by plasma-spraying commonly used MCrAlY (e.g., CoNiCrAlY) to a thickness of 100 to 250 µm.

This plasma spraying is carried out in air, and it is preferable to use an electric current of about 500 to 600 A and a working gas comprising a gaseous mixture composed of argon gas and hydrogen gas. The mixing ratio of argon gas and hydrogen gas in the gaseous mixture is preferably about 5:1, and the total flow rate of the gaseous mixture is preferably in the range of 40 to 50 liters per minute. The distance between the plasma spraying torch and the shroud material is preferably in the range of 100 to 150 mm, and the feed rate of powder is preferably in the range of 30 to 40 g per minute. The plasma spraying is carried out by moving the spraying torch back and forth across the shroud material.

Then, ZrO₂+0.3-20wt% Y₂O₃ is further plasma-sprayed over the undercoat to a thickness of 0.3 to 2.2 mm, thus forming a zirconia ceramic layer. This plasma spraying is carried out in air, and it is preferable to use an electric current of about 500 to 600 A and a working gas comprising a gaseous mixture composed of argon gas and hydrogen gas. The mixing ratio of argon gas and hydrogen gas is preferably about 5:1, and the total flow rate thereof is preferably in the range of 40 to 50 liters per minute. The distance between the plasma spraying torch and the undercoat is preferably in the range of 100 to 150 mm, and the feed rate of powder is preferably in the range of 30 to 40 g per minute. The plasma spraying is carried out by moving the spraying torch back and forth across the shroud material having the aforesaid undercoat sprayed thereon until it is coated to a thickness of 0.3 to 2.2 mm.

Thereafter, the shroud material on which the undercoat and the zirconia ceramic layer have been formed is subjected to shot peening by means of an air-operated accelerator or the like. This causes the zirconia ceramic layer to undergo stress-induced martensitic transformation and can thereby transform it into a monoclinic crystal structure. In the shot peening, it is preferable to use shot particles having an average diameter of 0.1 to 0.6 mm and formed of silicon carbide harder than zirconia. The working pressure is preferably in the range of 0.3 to 0.7 MPa, and the feed rate of shots is preferably in the range of 5 to 30 kg per minute. Moreover, it is preferable that the blasting angle be 90°, the blasting time be in the range of 1 to 30 minutes, and the distance between the shot peening nozzle and the shroud subjected to shot peening be in the range of 10 to 30 cm.

### EXAMPLES

The present invention is further illustrated by the following example.

### Example 1

As illustrated in FIG. 1, Inconel 713C was used as the shroud material. First of all, in order to relax the differential thermal expansion between the shroud material and a zirconia ceramic layer as will be described later, an undercoat was applied to the shroud material by plasma-spraying CoNiCrAlY in air to a thickness of 100 to 250 µm. This plasma spraying was carried out by using an electric current of about 500 to 600 A and a working gas comprising a gaseous mixture composed of argon gas and hydrogen gas. The mixing ratio of argon gas and hydrogen gas was about 5:1, and the total flow rate thereof was in the range of 40 to 50 liters per minute. The distance between the plasma spraying torch and the shroud material was in the range of 100 to 150 mm, and the feed rate of powder was in the range of 30 to 40 g per minute. The plasma spraying was carried out by moving the spraying torch back and forth across the shroud material until it was coated to a thickness of 100 to 250 µm.

Thereafter, ZrO₂+8wt% Y₂O₃ was further plasma-sprayed over the undercoat in air to form a zirconia ceramic layer having a thickness of 0.3 to 2.2 mm. This plasma spraying was carried out by using an electric current of about 500 to 600 A and a working gas comprising a gaseous mixture composed of argon gas and hydrogen gas. The mixing ratio of argon gas and hydrogen gas was about 5:1, and the total flow rate thereof was in the range of 40 to 50 liters per minute. The distance between the plasma spraying torch and the shroud material was in the range of 100 to 150 mm, and the feed rate of powder was in the range of 30 to 40 g per minute. The plasma spraying was carried out by moving the spraying torch back and forth across the undercoat until it was coated to a thickness of 0.3 to 2.2 mm.

After these spraying steps, in order to cause stress-induced martensitic transformation, the zirconia ceramic layer was subjected to shot peening by means of an air-operated accelerator. In this shot peening, there were used shot particles having an average diameter of 0.1 to 0.6 mm and formed of silicon carbide harder than zirconia. The working pressure was in the range of 0.3 to 0.7 MPa, the feed rate of shots was in the range of 5 to 30 kg per minute, and the blasting angle was 90°. The blasting time was in the range of 1 to 30 minutes, and the distance between the shot peening nozzle and the shroud was in the range of 10 to 30 cm.

Table 1 shows the Vickers hardnesses of the abradable coating treated in this Example 1, at several stages of the treatment. For purposes of comparison, data on coatings formed in the same manner by using ZrO₂ and ZrO₂+30wt% Y₂O₃ that are outside the scope of the present invention is also shown.

Vickers hardness was measured by forcing a diamond indenter into the surface having a zirconia coating formed thereon, according to JIS Z 2244 "Vickers Hardness TestTesting Method". Moreover, in order to examine the thermal effect resulting from operation, a gas turbine was assembled and operated under rated conditions for 10 hours.

**Table 1**

| Unit: Hv 1 | | | |
|---|---|---|---|
| | Example 1 | Comparative Example 1 | Comparative Example 2 |
| Composition of coating | ZrO₂ + 8wt% Y₂O₃ | ZrO₂ | ZrO₂ + 30wt%Y₂O₃ |
| After spraying | 1000 | 700 | 1000 |
| After shot peening | 800 | 700 | 1000 |
| After rated combustion test of gas turbine | 1000 | 700 | 1000 |

As can be seen from Table 1, the present invention could cause stress-induced martensitic transformation in a coating comprising a zirconia ceramic material by subjecting it to shot peening, and thus reduce its hardness.

## Claims

1. A method for forming an abradable coating which comprises the steps of coating a shroud material with a partially stabilized zirconia ceramic material to form a zirconia ceramic layer having a cubic or tetragonal crystal structure on the surface of said shroud material; and subjecting the zirconia ceramic layer to shot peening and thereby transforming the crystal structure of the zirconia ceramic layer into a monoclinic crystal structure.

2. A method for forming an abradable coating as claimed in claim 1 wherein said partially stabilized zirconia ceramic material contains at least one stabilizer selected from the group consisting of Y₂O₃, CaO, MgO and CeO₂.

3. A method for forming an abradable coating as claimed in claim 1 therein said stabilizer is Y₂O₃ and said partially stabilized zirconia ceramic material comprises 100 parts by weight of ZrO₂ and 0.3 to 20 parts by weight of Y₂O₃.

4. A method for forming an abradable coating as claimed in claim 1 wherein said shot peening is carried out by using a shot material having a higher hardness than zirconia.

5. A method for forming an abradable coating as claimed in claim 4 wherein said shot material comprises silicon carbide or tungsten carbide.

## Patentansprüche

1. Verfahren zur Bildung einer abschleifbaren Beschichtung, das die Stufen der Beschichtung eines Verstärkungsrandmaterials mit einem partiell stabilisierten Zirconiumdioxidkeramikmaterial unter Bildung einer Zirconiumdioxidkeramikschicht, die eine kubische oder tetragonale Kristallstruktur aufweist, auf der Oberfläche des Verstärkungsrandmaterials und des Durchführens eines Kugelstrahlens an der Zirconiumdioxidkeramikschicht und dadurch der Umwandlung der Kristallstruktur der Zirconiumdioxidkeramikschicht in eine monokline Kristallstruktur umfasst.

2. Verfahren zur Bildung einer abschleifbaren Beschichtung gemäß Anspruch 1, wobei das partiell stabilisierte Zirconiumdioxidkeramikmaterial mindestens ein Stabilisierungsmittel enthält, das aus der Gruppe von Y₂O₃, CaO, MgO und CeO₂ ausgewählt ist.

3. Verfahren zur Bildung einer abschleifbaren Beschichtung gemäß Anspruch 1, wobei das Stabilisierungsmittel Y₂O₃ ist und das partiell stabilisierte Zirconiumdioxidkeramikmaterial 100 Gewichtsteile ZrO₂ und 0,3 bis 20 Gewichtsteile Y₂O₃ umfasst.

4. Verfahren zur Bildung einer abschleifbaren Beschichtung gemäß Anspruch 1, wobei das Kugelstrahlen unter Verwendung eines Strahlmaterials, das eine höhere Härte als Zirconiumdioxid aufweist, durchgeführt wird.

5. Verfahren zur Bildung einer abschleifbaren Beschichtung gemäß Anspruch 4, wobei das Strahlmaterial Siliciumcarbid oder Wolframcarbid umfasst.

## Revendications

1. Procédé pour former un revêtement abradable, qui comprend les étapes consistant à revêtir un matériau d'anneau avec un matériau céramique de zircone partiellement stabilisé pour former une couche céramique de zircone ayant une structure cristalline cubique ou tétragonale sur la surface dudit matériau d'anneau ; et à soumettre la couche céramique de zircone à un grenaillage et à transformer ainsi la structure cristalline de la couche céramique de zircone en une structure cristalline monoclinique.

2. Procédé pour former un revêtement abradable selon la revendication 1, dans lequel ledit matériau céramique de zircone partiellement stabilisé contient au moins un stabilisant choisi dans le groupe constitué par Y₂O₃, CaO, MgO et CeO₂.

3. Procédé pour former un revêtement abradable selon la revendication 1, dans lequel ledit stabilisant est Y₂O₃ et ledit matériau céramique de zircone partiellement stabilisé comprend 100 parties en poids de ZrO₂, et 0,3 à 20 parties en poids de Y₂O₃.

4. Procédé pour former un revêtement abradable selon la revendication 1, dans lequel ledit grenaillage est effectué en utilisant un matériau de grenaillage ayant une dureté plus élevée que la zircone.

5. Procédé pour former un revêtement abradable selon la revendication 4, dans lequel ledit matériau de grenaillage comprend du carbure de silicium ou du carbure de tungstène.
